# EUROPÄISCHE PATENTSCHRIFT

(11) **EP 1 098 853 B1**
(45) Veröffentlichungstag und Bekanntmachung des Hinweises auf die Patenterteilung: **16.01.2002**
(21) Anmeldenummer: 99948651.7
(22) Anmeldetag: 21.07.1999
(51) Int. Cl.: C02F 1/46

(54) **VERFAHREN UND VORRICHTUNG ZUR KAPAZITIVEN DEMINERALISIERUNG VON IONEN ENTHALTENDEN FLÜSSIGKEITEN**
METHOD AND DEVICE FOR CAPACITATIVE DEMINERALIZATION OF FLUIDS CONTAINING IONS
PROCEDE ET DISPOSITIF POUR DEMINERALISER PAR VOIE CAPACITIVE DES LIQUIDES CONTENANT DES IONS

(30) Priorität: 21.07.1998 DE 19832822
(43) Veröffentlichungstag der Anmeldung: 16.05.2001
(73) Patentinhaber: Pfefferle, Uwe, 82392 Habach-Dürnhausen (DE); Sitter, Alois, 89415 Lauingen (DE)
(72) Erfinder: Pfefferle, Uwe, 82392 Habach-Dürnhausen (DE); Sitter, Alois, 89415 Lauingen (DE)
(74) Vertreter: Schweiger, Martin, Dipl.-Ing.
(86) Internationale Anmeldenummer: DE9902220
(87) Internationale Veröffentlichungsnummer: WO0005175

(56) Entgegenhaltungen:
- EP-A- 0 377 411
- DE-A- 4 003 516
- DE-A- 4 421 608
- US-A- 3 716 459

## Beschreibung

Die Erfindung betrifft ein Verfahren und eine Vorrichtung zur kapazitiven Demineralisierung von Ionen enthaltenden Flüssigkeiten.

In der Veröffentlichung WO98/17587 werden zum Stand der Technik Verfahren und Vorrichtungen zur Wasseraufbereitung, insbesondere Demineralisierung und Entkarbonisierung beschrieben.

Hierbei wird von zwei grundsätzlichen Verfahrensprinzipien ausgegangen, bei denen es sich zum einen um eine Entkarbonisierung mit Kationenaustauscherharzen in der H⁺-Form handelt und zum anderen um eine Entkarbonisierung mit durch Ausfällen von Karbonaten, insbesondere Kalk.

Der Nachteil der bekannten Verfahren, bei denen die Entkarbonisierung über pH-Wertanhebung realisiert wird, wird in dieser Druckschrift darin gesehen, daß man große Mengen an chemischen Zusätzen dem Wasser beimengen muß. Zum Beispiel erbringt die Zugabe von Kalkmilch zusätzliche CA²⁺-Ionen ins Wasser, die im nachfolgenden Kalkausfallprozeß nicht immer vollständig ausgefällt werden können. Zur Verwendung von Natronlauge und Soda im Trinkwasserbereich wird ausgeführt, daß hier die Grenzwerte für Natriumionen entsprechende Grenzen setzen.

Ein weiteres Problem wird in dem nach der Kalkausfällung zu hohen pH-Wert des Wassers gesehen. Hier müssen entsprechende Gegenmaßnahmen getroffen werden.

Bei elektrochemischen Verfahren als Alternative wird als Problem angesehen, daß es wichtig ist, die Elektrodenreaktion unterhalb der Wasserzersetzungsspannung von 1,23 V durchzuführen, da sich sonst an der Anode H⁺-Ionen bilden, die den pH-Wert wieder absenken würden. Dadurch sei der Verfahrenserfolg auf den im Wasser vorhandenen Sauerstoff und dessen elektrochemische Umsetzung an der Kathode beschränkt.

Zur Vermeidung dieser Probleme wird in der WO98/17587 vorgeschlagen, die nötigen OH⁻-Ionen durch elektrolytische Zerlegung von Wasser an der Kathode zu bilden. Hierbei soll durch ein Diaphragma verhindert werden, daß die OH⁻-Ionen mit an der Kathode gebildeten H⁺-Ionen rekombinieren.

Im Rahmen vorliegender Erfindung durchgeführte Untersuchungen haben jedoch ergeben, daß das bekannte Verfahren und die entsprechende Vorrichtung insofern steuerungs- und verfahrenstechnisch relativ aufwendig sind, als daß es erforderlich ist, zwischen Kathode und Anode eine über 1,22 V liegende Spannung anzulegen, wobei im Kathodenraum, der durch Einbringen eines Diaphragmas zwischen Kathode und Anode erzeugt wird, ein basisches Milieu geschaffen werden muß, in dem Karbonat und/oder Magnesiumkarbonat ausfällt.

Es ist daher Aufgabe der vorliegenden Erfindung, ein Verfahren und eine Vorrichtung zur kapazitiven Demineralisierung von Ionen enthaltende Flüssigkeiten zu schaffen, die einfach auch großtechnisch realisierbar sind und eine hohe Effizienz ermöglichen.

Die Lösung dieser Aufgabe erfolgt durch die Merkmale des Anspruchs 1 bzw. des Anspruchs 4.

Gemäß den Prinzipien vorliegender Erfindung wird in einem Filterbehälter mit einer Filter- bzw. Diaphragmawand eine Anordnung hochkapazitiver Elektroden, die vorzugsweise aus einem leitfähigen Material mit extrem hoher Oberfläche bestehen, verwendet. Durch das Anlegen eines elektrischen Feldes werden in einem nächsten Verfahrensschritt die in der Flüssigkeit enthaltenden Ionen durch die Filterwand des Filterbehälters hindurchgeleitet und bilden an der Elektrodenoberfläche eine sogenannte Bilayer-Schicht. Danach wird eine Serie von getakteten Spannungsspitzen in diese eine übersättigte Lösung darstellende Bilayer-Schichten eingeleitet, was zum Ausfällen von aus Ionenverbindungen resultierenden mikrokristallinen Strukturen führt. Diese mikrokristallinen Strukturen können danach aus dem Filterbehälter entfernt werden.

Die Unteransprüche haben vorteilhafte Weiterbildungen der Erfindung zum Inhalt.

So ist es möglich, an die hochkapazitiven Elektroden bzw. Kondensatorelemente entweder ein Gleichspannungs- oder ein Wechselspannungsfeld anzulegen. Als Diaphragma- bzw. Filterwand wird vorzugsweise eine die hochkapazitiven Elektroden umgebende geschlossene becherförmige Filterwand mit einer Porengröße verwendet, die weitgehend ein Eindringen von Wasser verhindert, jedoch einen Durchtritt der eine Hydrathülle aufweisenden Ionen ermöglicht.

Zum Entfernen der ausgefällten mikrokristallinen Strukturen können geeignete Filtrationsmethoden oder andere Rückhalteverfahren verwendet werden.

Andere gelöste Ionen, die durch das Einleiten der getakteten Spannungsspitzen nicht ausgefällt werden können, können vorzugsweise durch geeignete Depolarisation bzw. Umpolung der Kondensatorelemente bzw. hochkapazitiven Elektroden abgelöst und dem Medium durch Bindung an geeigneten Oberflächen oder durch getaktete Spülvorgänge entzogen werden.

Die erfindungsgemäße Vorrichtung kann insbesondere für den großtechnischen Einsatz vorzugsweise modular und mäanderförmig aufgebaut werden, um den Wirkungsgrad zu erhöhen und die Polarisationsumkehr ohne größere elektrische Verluste möglich zu machen.

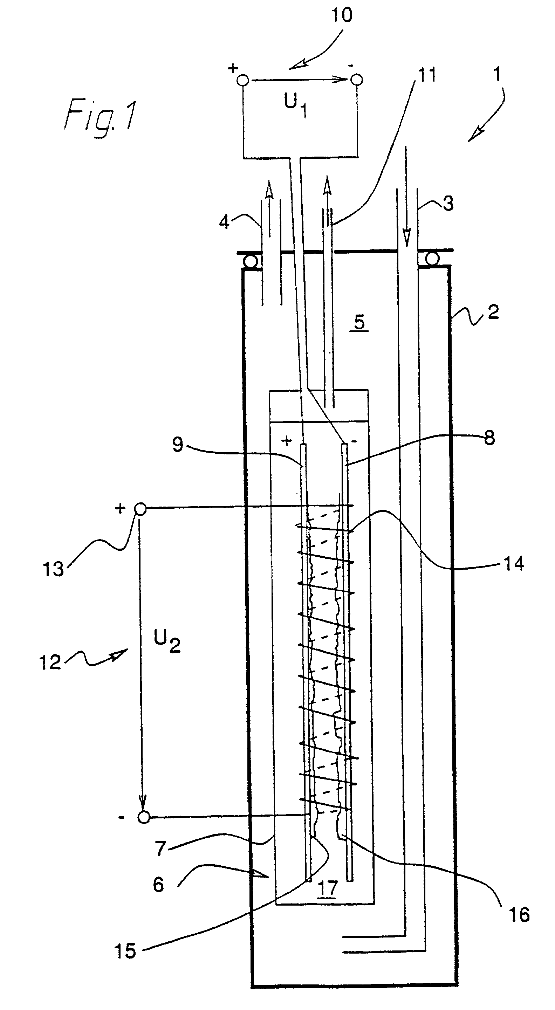

Weitere Einzelheiten, Merkmale und Vorteile der Erfindung ergeben sich aus nachfolgender Beschreibung eines Ausführungsbeispiels anhand der Zeichnung.

Es zeigt:

Die einzige Figur der Zeichnung eine schematische stark vereinfachte Prinzipdarstellung einer erfindungsgemäßen Vorrichtung zur kapazitiven Demineralisierung von Ionen enthaltender Flüssigkeiten.

Die Figur zeigt eine Vorrichtung 1, die bei der dargestellten Ausführungsform einen äußeren Behälter 2 mit einem Zulauf 3 und einem Ablauf 4 für eine in den Innenraum 5 einleitbare Ionen enthaltende Flüssigkeit aufweist.

Im Innenraum 5 des Behälters 2 ist ein Filterbehälter 6 angeordnet. Der Filterbehälter 6 weist eine Filter-/Diaphragmawand 7 auf. Der Filterbehälter 6 umschließt einen Behandlungsraum 17, in dem beabstandet zueinander im Beispielsfalle zwei hoch kapazitive Elektroden bzw. Kondensatorelemente vorzugsweise in Form von eine sehr hohe Oberfläche aufweisenden Kondensatorplatten 8, 9 angeordnet sind. Falls nötig, kann auch zwischen den Kondensatorplatten 8, 9 ein Diaphragma angeordnet sein.

Die Kondensatorplatten 8, 9 sind mit einer ersten Spannungsquelle 10 elektrisch verbunden.

Der Behälter 2 weist ferner einen drucklosen Ablauf 11 auf, durch den auf geeignete Art und Weise, beispielsweise durch entsprechende Differenzdruckverhältnisse, ausgefällte mikrokristalline Strukturen aus dem Behandlungsraum 17 entfernt werden können.

Die Figur verdeutlicht ferner eine Erzeugungseinrichtung 12 für das Einleiten von Spannungsspitzen in den Raum zwischen den Kondensatorplatten 8, 9. Diese Erzeugungseinrichtung 12 weist eine Spannungsquelle 13 und im Beispielsfalle eine Spule 14 auf, die bei der in der Figur dargestellten Ausführungsform um die Kondensatorplatten 8, 9 herum angeordnet ist. Alternativ ist es auch möglich, zwischen die Kondensatorplatten 8, 9 einen Kern mit einer um diesen herumgewickelten Spule einzubringen. Schließlich ist es ferner möglich, durch geeignete steuerungstechnische Einrichtungen, die Kondensatorplatten 8, 9 mittelbar zur Erzeugung und Einleitung von Spannungsspitzen zu benutzen. Grundsätzlich sind auch mehrere Spulen und Kerne möglich.

Soll mit der erfindungsgemäßen Vorrichtung 1 eine Ionen enthaltende Flüssigkeit behandelt werden, wird zunächst die Flüssigkeit bzw. das flüssige Medium über den Zulauf 3 in den Innenraum 5 des Behälters 2 eingeleitet. Nach dem Anlegen einer Spannung aus der Spannungsquelle 10 an die Kondensatorplatten 8 und 9 erfolgt eine Wanderung von Ionen durch die Diaphragmawand 7, was zur Bildung zweier Bilayer-Schichten 15, 16 auf den Kondensatorplatten 8, 9 führt. Nach dem Anlegen einer Spannung U2 und dem entsprechenden Einleiten getakteter Spannungsspitzen über die Spule 14 in die lokal übersättigte Lösungen bildenden Bilayer-Schichten 15, 16 fallen mikrokristalline Strukturen aus, welche mittels spezieller Vorrichtungen, wie beispielsweise Filtrationsvorrichtungen, über den drucklosen Ablauf 11 der Vorrichtung 1 entzogen werden können. Nicht ausfällbare Ionen können dem Behälter durch Spülvorgänge oder durch Bindung an geeigneten Oberflächen entzogen werden.

## Patentansprüche

1. Verfahren zur kapazitiven Demineralisierung von Ionen enthaltenden Flüssigkeiten mit folgenden Verfahrensschritten:
- Einleiten der Flüssigkeit in einen Behälter (2);
- Durchleiten von Ionen durch eine Filterwand (7) durch Anlegen eines elektrischen Feldes an hochkapazitive Kondensatorelemente (8, 9) innerhalb der Filterwand (7);
- Einleiten von getakteten Spannungsspitzen in die sich auf den Kondensatorelementen (8, 9) bildende übersättigte Lösung zum Ausfällen von aus Ionenverbindungen resultierenden mikrokristallinen Strukturen, und zwar mittels einer Spule; und
- Entfernen der mikrokristallinen Strukturen.

2. Verfahren nach Anspruch 1, **dadurch gekennzeichnet, daß** ein Gleichspannungsfeld oder Mechselspannungsfeld angelegt wird.

3. Verfahren nach Anspruch 1 oder 2, **dadurch gekennzeichnet, daß** durch Depolarisation bzw. Umpolung der Kondensatorelemente in der übersättigten Lösung vorhandene andere hochlösliche Ionen von den Kondensatorelementen (8, 9) abgelöst und entfernt werden.

4. Vorrichtung (1) zur kapazitiven Demineralisierung von Ionen enthaltenden Flüssigkeiten;
- mit einem Behalter (2), der einen Innenraum (5) zur Aufnahme der Flüssigkeit aufweist;
- mit einem im Innenraum (5) angeordneten Filterbehälter (6), der eine Filter-/Diaphragmawand (7) aufweist;
- mit einer Kondensatorelementanordnung (8, 9) innerhalb des Filterbehälters (6); und
- mit einer Erzeugungseinrichtung (12) für in einen Behandlungsraum (17) des Filterbehälters (6) einleitbare Spannungsspitzen, wobei die Erzeugungseinrichtung eine Spule aufweist.

5. Vorrichtung nach Anspruch 4, **dadurch gekennzeichnet, daß** die Kondensatorelementanordnung zwei beabstandete hochkapazitive Kondensatorplatten (8, 9) aufweist, die mit einer Wechselfeld- oder Gleichspannungsfelderzeugungseinrichtung (10) verbunden sind.

6. Vorrichtung nach Anspruch 4 oder 5, **dadurch gekennzeichnet, daß** die Erzeugungseinrichtung (12) eine separate Spannungsquelle (13) aufweist, die mit einer Spule (14) zum Eintrag von Spannungsspitzen verbunden ist.

7. Vorrichtung nach Anspruch 6, **dadurch gekennzeichnet, daß** die Spule (14) um die Kondensatorplatten (8, 9) herum angeordnet ist.

8. Vorrichtung nach Anspruch 6, **dadurch gekennzeichnet, daß** dia Spule (14) zwischen den Kondensatorplatte (8, 9) angeordnet ist.

9. Vorrichtung nach Anspruch 4, **dadurch gekennzeichnet, daß** die Spannungsquelle (13) der Erzeugungseinrichtung für Spannungsspitzen mit den Kondensatorplatten (8, 9) verbunden ist.

## Claims

1. A method for capacitive demineralisation of liquids containing ions the method comprising the following steps:
- Running the liquid into a container (2)
- Passing of ions through a filter wall (7) by applying an electrical field to highly capacitive capacitor elements (8, 9) within the filter wall (7) ;
- Triggering of clocked voltage peaks into the supersaturated solution building up on the capacitor elements (8, 9) in order to precipitate micro-crystalline structures resulting from ion combinations by means of a coil;
- Removing of the micro-crystalline structures.

2. The method according to claim 1, **characterised in that** a field of direct voltage or a field of alternating voltage is applied.

3. The method according to claim 1 or 2, **characterised in that** other highly soluble ions existing in the supersaturated solution are detached and removed from the capacitor elements (8, 9) by depolarisation or by polar reversal of the capacitor elements.

4. Apparatus (1) for capacitive demineralisation of liquids containing ions;
- with a container (2) providing an interior space (5) for receiving the liquid;
- with a filter container (6) providing a filter-/diaphragm wall (7) placed in the interior space (5);
- with an arrangement of capacitor elements (8, 9) within the filter container (6);
- with a generating device (12) in order to trigger voltage peaks into a treatment area (17) of the filter container (6), the generating device providing a coil.

5. Apparatus according to claim 4, **characterised in that** the arrangement of capacitor elements comprises two highly capacitive capacitor plates (8, 9) arranged at a distance from each other, the capacitor plates (8, 9) being connected with a device generating a field of alternating voltage or a field of direct voltage (10).

6. Apparatus according to claim 4 or 5, **characterised in that** the generating device (12) comprises a separate voltage source (13) being connected with a coil (14) for introduction of voltage peaks.

7. Apparatus according to claim 6, **characterised in that** the coil (14) is arranged around the capacitor plates (8, 9).

8. Apparatus according to claim 6, **characterised in that** the coil (14) is arranged between the capacitor plates (8, 9).

9. Apparatus according to claim 4, **characterised in that** the voltage source (13) of the generating device for voltage peaks is connected to the capacitor plates (8, 9).

## Revendications

1. Procédé de déminéralisation capacitive de liquides ioniques comprenant les étapes suivantes:
- on introduit le liquide dans un réservoir (2);
- on fait passer des ions à travers une paroi filtrante (7) grâce à l'application, à l'intérieur de la paroi filtrante (7), d'un champ électrique aux éléments de condensateurs hautement capacitifs (8, 9);
- on introduit des pics de tension synchronisés dans la solution sursaturée se formant sur les éléments de condensateurs (8, 9), afin de précipiter des structures microcristallines résultant de combinaisons ioniques, et ce à l'aide d'une bobine; et
- on enlève les structures microcristallines.

2. Procédé selon la revendication 1, **caractérisé en ce qu'**on introduit un champ de tension continue ou de tension alternative.

3. Procédé selon la revendication 1 ou 2, **caractérisé en ce que**, grâce à une dépolarisation ou une inversion des pôles des éléments de condensateurs, d'autres ions hautement solubles présents dans la solution sursaturée sont détachés et enlevés des éléments de condensateurs (8, 9).

4. Dispositif (1) de déminéralisation capacitive de liquides ioniques;
- avec un réservoir (2) présentant un espace interne (5) destiné à la réception du liquide;
- avec un réservoir filtrant (6) disposé dans l'espace interne (5) et présentant une paroi filtrante/paroi à diaphragme (7);
- avec un dispositif d'éléments de condensateurs (8, 9) à l'intérieur du réservoir filtrant (6); et
- avec un dispositif de génération (12) de pics de tension introduisible dans l'espace de traitement (17) du réservoir filtrant (6), le dispositif de génération présentant une bobine.

5. Dispositif selon la revendication 4, **caractérisé en ce que** le dispositif d'éléments de condensateurs présente deux plaques de condensateurs hautement capacitives séparées (8, 9), qui sont reliées à un dispositif de génération de champ de tension continue ou de tension alternative (10).

6. Dispositif selon la revendication 4 ou 5, **caractérisé en ce que** le dispositif de génération (12) présente une source de tension (13) séparée, qui est reliée à une bobine (14) pour l'introduction des pics de tension.

7. Dispositif selon la revendication 6, **caractérisé en ce que** la bobine (14) est disposée autour des plaques de condensateurs (8, 9).

8. Dispositif selon la revendication 6, **caractérisé en ce que** la bobine (14) est disposée entre les plaques de condensateurs (8, 9).

9. Dispositif selon la revendication 4, **caractérisée en ce que** la source de tension (13) du dispositif de génération des pics de tension est reliée aux plaques de condensateurs (8, 9).
